# EUROPÄISCHE PATENTSCHRIFT

(11) **EP 0 966 353 B1**
(45) Veröffentlichungstag und Bekanntmachung des Hinweises auf die Patenterteilung: **19.12.2001**
(21) Anmeldenummer: 98912253.6
(22) Anmeldetag: 17.02.1998
(51) Int. Cl.: B41C 1/04, H04N 1/387

(54) **VERFAHREN UND EINRICHTUNG ZUR GRAVUR VON DRUCKZYLINDERN**
METHOD AND DEVICE FOR ENGRAVING IMPRESSION CYLINDERS
PROCEDE ET DISPOSITIF DE GRAVURE DE CYLINDRES D'IMPRESSION

(30) Priorität: 12.03.1997 DE 19710005
(43) Veröffentlichungstag der Anmeldung: 29.12.1999
(73) Patentinhaber: Heidelberger Druckmaschinen Aktiengesellschaft, 69115 Heidelberg (DE)
(72) Erfinder: BECKER, Karsten, D-24306 Rathjensdorf (DE); LÜBCKE, Bernd, D-24113 Molfsee (DE); BLEIHÖFER-STERZINGER, Reinhold, Bruno, D-24232 Schönkirchen (DE)
(86) Internationale Anmeldenummer: DE9800460
(87) Internationale Veröffentlichungsnummer: WO9840211

(56) Entgegenhaltungen:
- EP-A- 0 108 376
- EP-A- 0 207 246
- WO-A-94/19900
- GB-A- 1 407 487
- GB-A- 2 100 093
- US-A- 3 975 761
- US-A- 4 605 957
- US-A- 5 186 102

## Beschreibung

Die Erfindung bezieht sich auf das Gebiet der elektronischen Reproduktionstechnik und betrifft ein Verfahren zur Gravur von gerasterten Druckzylindern, insbesondere für den Tiefdruck, mittels eines Gravierorgans in einer elektronischen Graviermaschine.

Bei der Gravur von gerasterten Druckzylindern in einer elektronischen Graviermaschine bewegt sich ein Gravierorgan, das beispielsweise einen Gravierstichel als Schneidwerkzeug aufweist, in axialer Richtung kontinuierlich oder schrittweise an einem rotierenden Druckzylinder entlang. Der von einem Graviersignal gesteuerte Gravierstichel schneidet eine Folge von in einem Raster angeordneten Vertiefungen, im folgenden Näpfchen genannt, in die Mantelfläche des Druckzylinders. Das Graviersignal wird aus der Überlagerung eines die Tonwerte zwischen "Schwarz" und "Weiß" repräsentierenden Bildsignals mit einem periodischen Rastersignal gebildet. Das Rastersignal bestimmt zusammen mit der Umfangsgeschwindigkeit des Druckzylinders und der axialen Vorschubgeschwindigkeit des Gravierorgans die Geometrie des gravierten Rasters. Während das periodische Rastersignal eine vibrierende Hubbewegung des Gravierstichels bewirkt, steuert das Bildsignal entsprechend den wiederzugebenden Tonwerten die Tiefen der in die Mantelfläche des Druckzylinders gravierten Näpfchen.

Eine derartige Graviermaschine zur Gravur von Druckzylindern ist beispielsweise aus der WO-A-94/19900 bekannt. Dort geht es um ein Verfahren zur Kalibrierung des Graviersignals, bei dem Näpfchen graviert werden, die geometrischen Istabmessungen der gravierten Näpfchen ausgemessen und bei dem aus dem Vergleich der gemessenen Istabmessungen mit vorgegebenen Sollabmessungen Einstellwerte ermittelt werden, mit denen die Graviersignalwerte für ausgewählte Tonwerte derart korrigiert werden, daß die in Form der Näpfchen tatsächlich gravierten Isttonwerte den durch die Bildsignalwerte definierten Solltonwerten entsprechen.

Aus der GB-A-1407487 ist eine weitere Graviermaschine zur Gravur von Druckzylindern bekannt. Dort geht es um ein Verfahren zur Gravur einer aus mehreren nach einem Layoutplan zusammengesetzten Bild- und Textteilen bestehenden Druckseite, bei dem die zur Gravur der Druckseite benötigten Gravurdaten vor der Gravur aus den Gravurdaten der einzelnen Bild- und Textteile nach dem Layoutplan zu Gesamtgravierlinien zusammengestellt und gespeichert werden und bei dem die zusammengestellten Gravierdaten der Gesamtgravierlinien bei der Gravur ausgelesen und dem Gravierorgan zugeführt werden.

Oft müssen bei der Druckformherstellung, insbesondere für den Verpackungsdruck, sequentielle, d.h. nacheinander ablaufende Gravuren mit gleichen oder unterschiedlichen Gravurparametern wie beispielsweise die Rasterparameter Rasterwinkel und Rasterweite erzeugt werden. Beispiele für sequentielle Gravuren sind die Nachgravur von Bereichen innerhalb einer Erstgravur oder Mehrfachgravuren (Nutzen) von Halbtonbildern und Strichinformation bzw. Barcodes in Achsrichtung. Diese sequentiellen Gravuren können auf einem Druckzylinder oder auf mehreren Druckzylindern mit gleichen oder unterschiedlichen Durchmessern erfolgen.

Aufgrund der Funktionsweisen herkömmlicher Graviermaschinen können in nachteiliger Weise derartige sequentielle Gravuren mit unterschiedlichen Gravurparametern auf einem Druckzylinder oder auf mehreren Druckzylindern mit gegebenenfalls unterschiedlichen Durchmessern nicht in einem Arbeitsgang automatisch, beispielsweise ohne Eingriff eines Bedieners in einer Nachtschicht, durchgeführt werden.

Aufgabe der vorliegenden Erfindung ist es daher, ein Verfahren zur Gravur von gerasterten Druckzylindern für den Tiefdruck, mittels eines Gravierorgans in einer elektronischen Graviermaschine derart zu verbessern, daß Gravuren mit gleichen oder unterschiedlichen Gravurparametern auf mindestens einem Druckzylinder automatisch in einem Arbeitsgang durchführbar sind.

Diese Aufgabe wird durch die Merkmale des Anspruchs 1 gelöst.

Vorteilhafte Weiterbildungen und Ausgestaltungen sind in den Unteransprüchen angegeben.

Die Erfindung wird nachfolgend anhand der Fig. 1 bis 5 näher erläutert.

Es zeigen:
- Fig. 1: ein prinzipielles Blockschaltbild einer Graviermaschine für Druckzylinder,
- Fig. 2: ein erstes Beispiel für eine sequentielle Gravur auf einem Druckzylinder,
- Fig. 3: ein zweites Beispiel für eine sequentielle Gravur auf einem Druckzylinder,
- Fig. 4: ein drittes Beispiel für eine sequentielle Gravur auf zwei Druckzylindern und
- Fig. 5: ein viertes Beispiel für eine sequentielle Gravur auf zwei Druckzylindern.

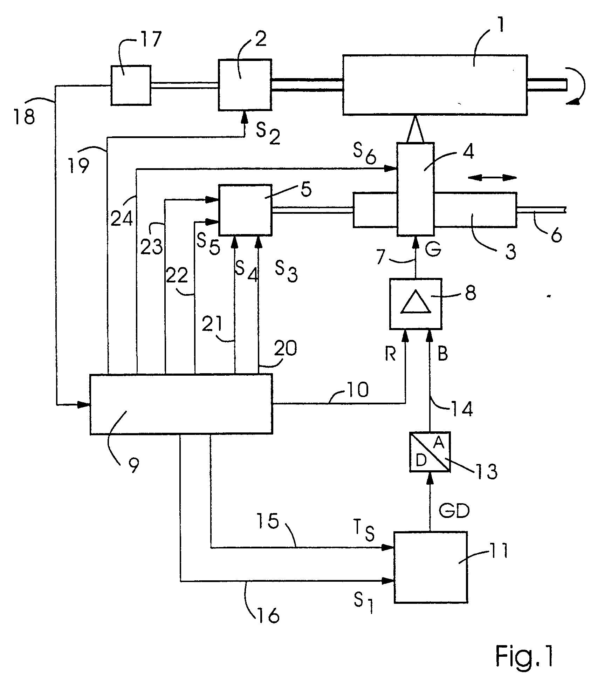

Fig. 1 zeigt ein prinzipielles Blockschaltbild einer Graviermaschine zur Gravur von Druckzylindern.

Ein Druckzylinder (1) wird von einem Rotationsantrieb (2) rotatorisch angetrieben. Ein auf einem Gravierwagen (3) montiertes Gravierorgan (4) bewegt sich mit Hilfe einer durch einen Vorschubantrieb (5) angetriebenen Spindel (6) in Achsrichtung an dem rotierenden Druckzylinder (1) vorbei.

Das Gravierorgan (4) ist im Ausführungsbeispiel ein elektromagnetisches Gravierorgan und weist im wesentlichen einen durch ein elektromagnetisches Antriebssystem bewegten Gravierstichel als Schneidwerkzeug, einen Gleitfuß und einen Schaber auf.

Der durch ein Graviersignal (G) auf einer Leitung (7) gesteuerte Gravierstichel des Gravierorgans (4) schneidet gravierlinienweise eine Folge von in einem Raster angeordneten Näpfchen in die Mantelfläche des rotierenden Druckzylinders (1), während sich das Gravierorgan (4) schrittweise axial an dem Druckzylinder (1) entlang bewegt. Der Gleitfuß, der sich während der Gravur auf der Mantelfläche des rotierenden Druckzylinders (1) abstützt, sorgt für einen konstanten Abstand zwischen dem Gravierstichel in seiner Ruhelage und der Mantelfläche. Der auf der Mantelfläche gleitende Schaber entfernt das sich beim Schneiden der Näpfchen bildende Material.

Die Gravur des Druckzylinders (1) erfolgt bei dem dargestellten Ausführungsbeispiel auf einzelnen, kreisförmig um den Druckzylinder (1) verlaufenden Gravierlinien, wobei das Gravierorgan (4) jeweils nach der Gravur einer Gravierlinie einen axialen Vorschubschritt zur nächsten Gravierlinie ausführt. Ein derartiges Gravierverfahren ist beispielsweise in der US 4,013,829 A beschrieben. Alternativ kann die Gravur des Druckzylinder (1) aber auch in einer helixförmig um den Druckzylinder (1) verlaufenden Gravierlinie erfolgen, wobei das Gravierorgan (4) dann eine kontinuierliche Vorschubbewegung ausführt.

Das Graviersignal (G) auf der Leitung (7) wird in einem Gravierverstärker (8) aus der Überlagerung eines periodischen Rastersignals (R), auch Vibration genannt, mit analogen Bildwerten (B) gebildet, welche die Tonwerte der zu gravierenden Näpfchen zwischen "Schwarz" und "Weiß" repräsentieren. Während das periodische Rastersignal (R) eine vibrierende Hubbewegung des Gravierstichels zur Erzeugung des Rasters bewirkt, bestimmen die analogen Bildwerte (B) entsprechend den zu gravierenden Tonwerten die Eindringtiefen des Gravierstichels in die Mantelfläche des Druckzylinders (1).

Die Frequenz des Rastersignals (R) zusammen mit der Umfangsgeschwindigkeit des Druckzylinders (1) und der axialen Vorschubschrittweite des Gravierorgans (4) bestimmen die Geometrie des zu gravierenden Rasters bezüglich Rasterwinkel und Rasterweite.

Das Rastersignal (R) wird in einer Ablaufsteuerung (9) erzeugt und dem Gravierverstärker (8) über eine Leitung (10) zugeführt.

In einem Gravurdaten-Speicher (11) sind die Gravurdaten (GD) Gravierlinie für Gravierlinie in der für die Gravur des Druckzylinders (1) erforderlichen Reihenfolge in Form von Dateien für die abzuarbeitenden Jobs eines Gravurauftrages abgelegt. Jedem zu gravierenden Näpfchen ist ein Gravurdatum von mindestens einem Byte zugeordnet, welches unter anderem als Gravierinformation den zu gravierenden Tonwert zwischen "Schwarz" und "Weiß" enthält.

Die Gravurdaten (GD) werden beispielsweise durch punkt- und zeilenweise, optoelektronische Abtastung einer zu reproduzierenden Vorlage in einem Scanner gewonnen und dann in dem Gravurdaten-Speicher (11) abgelegt.

Bei der Gravur des Druckzylinders (1) werden die Gravurdaten (GD) mittels einer Lesetaktfolge T_{S} aus dem Gravurdaten-Speicher (11) ausgelesen und in einem A/D-Wandler (13) in die analogen Bildwerte (B) umgewandelt, die dem Gravierverstärker (8) über eine Leitung (14) zugeführt werden.

Die Lesetaktfolge T_{S}, deren Frequenz der einfachen oder mehrfachen Frequenz des Rastersignals (R) entspricht, wird ebenfalls in der Ablaufsteuerung (9) erzeugt und gelangt über eine Leitung (15) an den Gravurdaten-Speicher (11). Die Ablaufsteuerung (9) erzeugt außerdem ein Steuerbefehl S₁ "Gravurfreigabe", welches dem Gravurdaten-Speicher (11) über eine Leitung (16) zugeführt wird und jeweils die Gravur der Näpfchen auf den einzelnen Gravierlinien freigibt.

Die Ablaufsteuerung (9) ist mit der Drehbewegung des Druckzylinders (1) synchronisiert, indem ein mit dem Rotationsantrieb (2) mechanisch gekoppelter Impulsgeber (17) ein Synchronsignal über die Leitung (18) an die Ablaufsteuerung (9) liefert.

In der Ablaufsteuerung (9) werden zur Durchführung der erfindungsgemäßen automatischen sequentiellen Gravur mit gleichen oder unterschiedlichen Gravurparametern verschiedene Steuerbefehle nach einem programmierbaren Ablaufplan für die abzuarbeitenden Jobs eines aktuellen Gravurauftrages generiert. Die Gravurparameter können beispielsweise die Rasterparameter, der Maßstab oder die Gradation sein. Die einzelnen Jobdaten einschließlich der Gravurparameter für die einzelnen Jobs eines aktuellen Gravurauftrages, werden in die Ablaufsteuerung (9) eingegeben.

Der Rotationsantrieb (2) weist einen in der Drehzahl veränderbaren Antriebsmotor auf. Nachdem der mit einer großen Masse behaftete Druckzylinder (1) in die Graviermaschine eingebracht ist, wird die Drehzahl des Antriebsmotors kontinuierlich aus dem Stillstand erhöht, bis der Druckzylinder (1) seine jeweilige Arbeitsdrehzahl erreicht hat. Mit einem Steuerbefehl S₂ "Drehzahländerung" auf einer Leitung (19) an den Rotationsantrieb (2) kann über eine Drehzahländerung die Umfangsgeschwindigkeit des Druckzylinders (1) entsprechend den zu gravierenden Rastern bei rotierendem Druckzylinder (1) variiert werden.

Der Vorschubantrieb (5) ist als Positionierungsantrieb mit einem Schrittmotor ausgebildet. Die Frequenz einer dem Schrittmotor zugeführten Impulstaktfolge bestimmt die Drehzahl des Schrittmotors und damit die Vorschubgeschwindigkeit des Gravierorgans (4).

Da jeder Takt der Impulstaktfolge einem zurückgelegten Weginkrement des Gravierorgans (4) entspricht, kann durch Zählen der Takte die jeweilige axiale Position des Gravierorgans (4) festgestellt werden.

Durch Vergleich einer vorgegebenen Anzahl von Takten der Impulstaktfolge, die einer axialen Sollposition des Gravierorgans (4) entspricht, mit der Anzahl der dem Schrittmotor zugeführten Takten der Impulstaktfolge entsprechend der jeweiligen axialen Istposition des Graviersystems (4), kann eine genaue axiale Positionierung des Gravierorgans (4) vorgenommen werden. Eine genaue axiale Positionierung des Gravierorgans (4) ist beim Anfahren von Startpositionen und bei Durchführung der schrittweisen Vorschubbewegung von Gravierlinie zu Gravierlinie während der Gravur erforderlich.

Zur Steuerung der Vorschubbewegung des Gravierorgans (4) werden verschiedene Befehle von der Ablaufsteuerung (9) an die Vorschubsteuerung (5) gegeben. Ein Steuerbefehl S₃ "Start/Stop" auf einer Leitung (20) steuert die Vorschubbewegung des Gravierorgans (4) beim Anfahren der axialen Startpositionen vor der Gravur und die schrittweise Vorschubbewegung während der Gravur.
Ein weiterer Steuerbefehl S₄ "Vorschubrichtung" auf einer Leitung (21) legt die Vorschubrichtung des Gravierorgans (4) beim Anfahren der Startpositionen fest. Ein anderer Steuerbefehl S₅ "Vorschubweite" auf einer Leitung (22) bestimmt entsprechend dem zu gravierenden Raster die jeweilige Vorschubschrittweite bzw. den Abstand zwischen den Gravierlinien. Über eine Leitung (23) werden die axialen Startpositionen (SP), die axialen Endpositionen (EP) sowie die Zustellposition des Gravierorgans (4) bei der Gravur der einzelnen Jobs an die Vorschubsteuerung (5) übermittelt.

Das Gravierorgan (4) weist eine nicht dargestellte elektrisch steuerbare Abhebevorrichtung auf, welche den aktiven Teil des Gravierorgans (4) mit Gravierstichel, Gleitfuß und Schaber zur Durchführung einer Gravur in eine Arbeitsstellung auf die Mantelfläche des rotierenden Druckzylinders (1) absenkt und bei Gravurunterbrechungen und Positionierungen des Gravierorgans (4) von der Mantelfläche des Druckzylinders (1) in eine Ruhestellung anhebt. Eine weitere nicht dargestellte Stellvorrichtung steuert die radiale Zustellung des Gravierorgans (4) in Abhängigkeit von dem jeweiligen Durchmesser des Druckzylinders (1).

Ein weiteres Steuersignal S₆ "Abheben" und "Zustellung" auf einer Leitung (24) von der Ablaufsteuerung (9) an die Abhebevorrichtung und die Stellvorrichtung des Gravierorgans (4) steuert die radiale Zustellung des Gravierorgans (4) und das Abheben und Absenken des aktiven Teils des Gravierorgans (4).

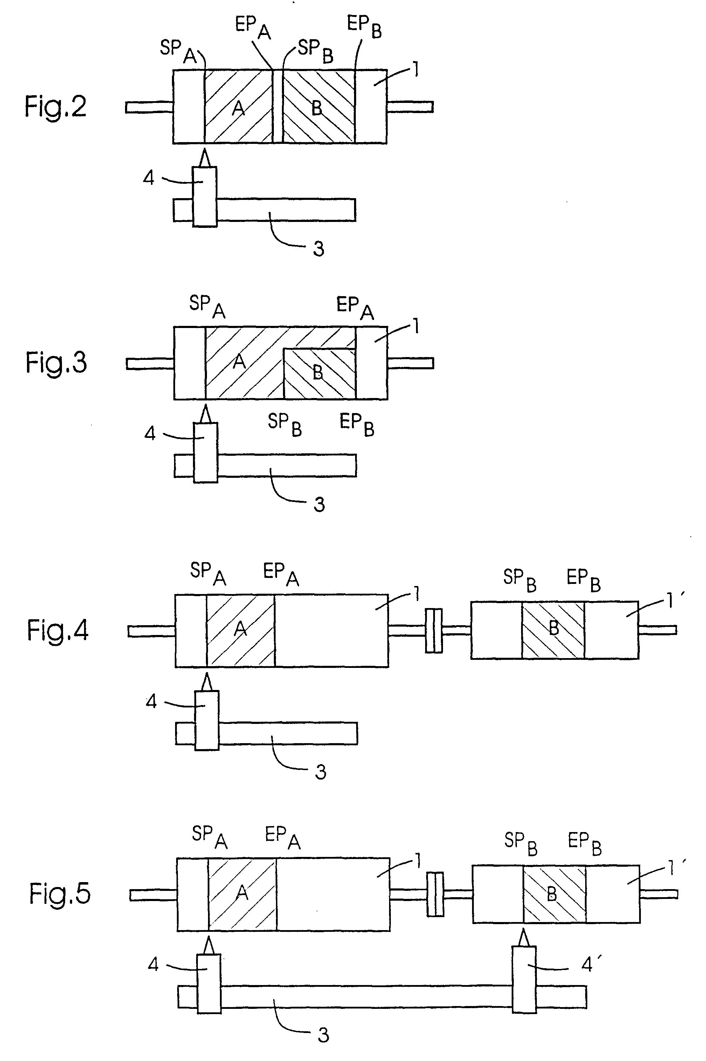

Nachfolgend werden einige Beispiele für automatisch ablaufende sequentielle Gravuren anhand der Fig. 2 bis 4 erläutert.

Fig. 2 zeigt ein erstes Beispiel für eine sequentielle Gravur von zwei Jobs auf einem Druckzylinder (1).

Auf dem Druckzylinder (1) sollen zwei in Achsrichtung nebeneinander liegende Gravuren (Nutzen) "A" und "B" mit einem einzelnen Gravierorgan (4) automatisch in einem Arbeitsgang graviert werden. Die Gravuren "A" und "B" sollen unterschiedliche Raster bezüglich Rasterwinkel und Rasterweite aufweisen. Die Gravur "A" möge beispielsweise Barcodes und die Gravur "B" ein Halbtonbild sein, wobei die Barcodes in einem wesentlich feineren Raster als das Halbtonbild graviert werden sollen.

In diesem Fall werden die Barcode-Datei des Jobs "A" und die Bild-Datei des Jobs "B" in dem Gravurdaten-Speicher (11) in Fig. 1 abgelegt sowie die unterschiedlichen Rasterparameter, die Startpositionen (SP_{A}; SP_{B}) und die Endpositionen (EP_{A}; EP_{B}) der beiden Jobs in die Ablaufsteuerung (9) eingegeben.

In der Ablaufsteuerung (9) werden die erforderliche Umfangsgeschwindigkeit des Druckzylinders (1) unter Berücksichtigung des jeweiligen Zylinderdurchmessers und die Vorschubweiten des Gravierorgans (4) ermittelt, die zur Gravur der unterschiedlichen Raster in den beiden Jobs eingestellt werden müssen.

Die sequentielle Gravur gemäß dem ersten Beispiel läuft dann automatisch in folgenden Schritten ab:
1. Einstellen der Umfangsgeschwindigkeit des Druckzylinders (1) entsprechend dem zu gravierenden Raster für die Gravur "A".
2. Einstellen der Vorschubweite des Gravierorgans (4) entsprechend dem zu gravierenden Raster für die Gravur "A".
3. Positionierung des Gravierorgans (4) auf die Startposition (SP_{A}) der Gravur "A" aus einer axialen Ausgangsposition.
4. Absenken des Gravierorgans (4) in die Arbeitsstellung.
5. Ausführen der Gravur "A" bis zur Endposition (EP_{A}).
6. Anheben des Gravierorgans (4) nach Erreichen der Endposition (EP_{A}) in die Ruhestellung.
7. Änderung der Umfangsgeschwindigkeit des Druckzylinders (1) entsprechend dem zu gravierenden Raster für die Gravur "B".
8. Änderung der Vorschubweite des Gravierorgans (4) entsprechend dem zu gravierenden Raster für die Gravur "B".
9. Positionierung des Gravierorgans (4) auf die Startposition (SP_{B}) der Gravur "B" aus der Endposition (EPA) heraus.
10. Absenken des Gravierorgans (4) in die Arbeitsstellung.
11. Ausführen der Gravur "B" bis zur Endposition (EP_{B}).
12. Anheben des Gravierorgans (4) nach Erreichen der Endposition (EP_{B}) in die Ruhestellung.
13. Positionierung des Graviersystems (4) in der axialenAusgangsposition.

Fig. 3 zeigt ein zweites Beispiel für eine sequentielle Gravur von zwei Jobs auf einem Druckzylinder (1).

Auf dem Druckzylinder (1) soll zunächst eine Erstgravur "A" und dann eine Nachgravur B" in einen bei der Erstgravur "A" ausgelassenen Bereich mit einem einzelnen Gravierorgan (4) automatisch in einem Arbeitsgang graviert werden. Erstgravur "A" und Nachgravur "B" sollen unterschiedliche Raster bezüglich Rasterwinkel und Rasterweite haben. Die zur Erst- und Nachgravur benötigten Gravierlinien werden beispielsweise durch Überlagerung der Gravurdaten (GD) aus den beiden Jobs (A; B) aufgebaut. Alternativ können die Startpositionen der Nachgravur "B" in Vorschub- und Umfangsrichtung auch errechnet werden, wobei bei der Nachgravur "B" nur die Gravurdaten (GD) des Jobs "B" gravierlinenweise ausgelesen werden.

Die sequentielle Gravur gemäß dem zweiten Beispiel läuft dann automatisch in folgenden Schritten ab:
1. Einstellen der Umfangsgeschwindigkeit des Druckzylinders (1) entsprechend dem zu gravierenden Raster für die Erstgravur "A".
2. Einstellen der Vorschubweite des Gravierorgans (4) entsprechend dem zu gravierenden Raster für die Erstgravur "A".
3. Positionierung des Gravierorgans (4) auf die Startposition (SP_{A}) der Erstgravur "A" aus der axialen Ausgangsposition.
4. Absenken des Gravierorgans (4) in die Arbeitsstellung.
5. Ausführen der Erstgravur "A" bis zur Endposition (EP_{A}) unter Aussparung des Bereiches für die Nachgravur "B".
6. Anheben des Gravierorgans (4) nach Erreichen der Endposition (EP_{A}) in die Ruhelage.
7. Rückführung des Gravierorgans (4) und Positionierung auf der Startposition (SP_{B}) der Nachgravur "B".
8. Änderung der Umfangsgeschwindigkeit des Druckzylinders (1) entsprechend dem zu gravierenden Raster für die Nachgravur "B".
9. Änderung der Vorschubweite des Gravierorgans (4) entsprechend dem zu gravierenden Raster für die Nachgravur "B".
10. Absenken des Gravierorgans (4) in die Arbeitsstellung.
11. Ausführen der Nachgravur "B" bis zur Endposition (EP_{B}) der Nachgravur "B".
12. Anheben des Gravierorgans (4) in der Endposition (EP_{B}) der Nachgravur "B" in die Ruhestellung.
13. Positionierung des Graviersystems (4) in der axialen Ausgangsposition

Fig. 4 zeigt ein drittes Beispiel für eine sequentielle Gravur von zwei Jobs auf zwei mechanisch miteinander gekoppelten Druckzylindern (1;1'), die unterschiedliche Durchmesser haben mögen (Twin-Betrieb).

Auf dem ersten Druckzylinder (1) soll eine Gravur "A" und auf dem zweiten Druckzylinder (1') eine Gravur "B" mit einem einzelnen Gravierorgan (4) automatisch in einem Arbeitsgang graviert werden. Gravur "A" und Gravur "B" haben wiederum unterschiedliche Raster.

Die sequentielle Gravur gemäß dem dritten Beispiel läuft dann automatisch in folgenden Schritten ab:
1. Einstellen der Umfangsgeschwindigkeit des ersten Druckzylinders (1) entsprechend dem zu gravierenden Raster für die Gravur "A" auf dem ersten Druckzylinder (1) unter Berücksichtigung seines Durchmessers.
2. Einstellen der Vorschubweite des Gravierorgans (4) entsprechend dem zu gravierenden Raster für die Gravur "A" auf dem ersten Druckzylinder (1).
3. Positionierung des Gravierorgans (4) auf die Startposition (SP_{A}) der Gravur "A" aus der axialen Ausgangsposition und radiale Zustellung des Gravierorgans (4) entsprechend dem Durchmesser des ersten Druckzylinders (1).
4. Absenken des Gravierorgans (4) in die Arbeitsstellung.
5. Ausführen der Gravur "A" bis zur Endposition (EP_{A}) mit dem Gravierorgan (4) auf dem ersten Druckzylinder (1).
6. Anheben des Gravierorgans (4) nach Erreichen der Endposition (EP_{A}) der Gravur "A" in die Ruhestellung.
7. Änderung der Umfangsgeschwindigkeit des zweiten Druckzylinders (1') entsprechend dem zu gravierenden Raster für die Gravur "B" auf dem zweiten Druckzylinder (1') unter Berücksichtigung seines Durchmessers.
8. Änderung der Vorschubweite des Gravierorgans (4) entsprechend dem zu gravierenden Raster für die Gravur "B" auf dem zweiten Druckzylinder (1').
9. Positionierung des Gravierorgans (4) auf der Startposition (SP_{B}) der Gravur "B" auf dem zweiten Druckzylinder (1') und radiale Zustellung des Gravierorgans (4) entsprechend dem Durchmesser des zweiten Druckzylinders (1').
10. Absenken des Gravierorgans (4) in die Arbeitsstellung.
11. Ausführen der Gravur "B" bis zur Endposition (EP_{B}) der Gravur "B" auf dem zweiten Druckzylinder (1').
12. Anheben des Gravierorgans (4) in der Endposition (EP_{B}) der Gravur "B" in die Ruhestellung.
13. Positionierung des Gravierorgans (4) in der axialen Ausgangsposition

Fig. 5 zeigt ein viertes Beispiel für eine sequentielle Gravur von zwei Jobs auf zwei mechanisch miteinander gekoppelten Druckzylindern (1;1'), die wiederum unterschiedliche Durchmesser haben mögen (Twin-Betrieb).

Auf dem ersten Druckzylinder (1) soll eine Gravur "A" und auf dem zweiten Druckzylinder (1') eine Gravur "B" mit jeweils einem Gravierorgan (4; 4'), die gemeinsam auf dem Gravierwagen montiert sind, automatisch in einem Arbeitsgang graviert werden. Gravur "A" und Gravur "B" haben wiederum unterschiedliche Raster.

Die sequentielle Gravur gemäß dem vierten Beispiel läuft dann automatisch in folgenden Schritten ab:
1. Einstellen der Umfangsgeschwindigkeit des ersten Druckzylinders (1) entsprechend dem zu gravierenden Raster für die Gravur "A" auf dem ersten Druckzylinder (1) unter Berücksichtigung seines Durchmessers.
2. Einstellen der Vorschubweite des ersten Gravierorgans (4) entsprechend dem zu gravierenden Raster für die Gravur "A" auf dem ersten Druckzylinder (1).
3. Positionierung des ersten Gravierorgans (4) auf die Startposition (SP_{A}) der Gravur "A" aus der axialen Ausgangsposition.
4. Absenken des ersten Gravierorgans (4) in die Arbeitsstellung.
5. Ausführen der Gravur "A" bis zur Endposition (EP_{A}) mit dem ersten Gravierorgan (4) auf dem ersten Druckzylinder (1).
6. Anheben des ersten Gravierorgans (4) nach Erreichen der Endposition (EP_{A}) der Gravur "A" in die Ruhestellung.
7. Änderung der Umfangsgeschwindigkeit des zweiten Druckzylinders (1') entsprechend dem zu gravierenden Raster für die Gravur "B" auf dem zweiten Druckzylinder (1') unter Berücksichtigung seines Durchmessers.
8. Einstellen der Vorschubweite des zweiten Gravierorgans (4') entsprechend dem zu gravierenden Raster für die Gravur "B" auf dem zweiten Druckzylinder (1').
7. Positionierung des zweiten Gravierorgans (4') auf der Startposition (SP_{B}) der Gravur "B" durch Rückführung des Gravierwagens (3).
10. Absenken des zweiten Gravierorgans (4) in die Arbeitsstellung.
11. Ausführen der Gravur "B" bis zur Endposition (EP_{B}) der Gravur "B" auf dem zweiten Druckzylinder (1').
12. Anheben des zweiten Gravierorgans (4') in der Endposition (EP_{B}) der Gravur "B" in die Ruhestellung.
13. Positionierung der Graviersysteme (4;4') in der axialen Ausgangsposition.

Bei dem dritten und vierten Beispiel für eine sequentielle Gravur können die beiden mechanisch gekoppelten Druckzylinder (1;1') selbstverständlich auch gleiche Durchmesser aufweisen und die Gravuren mit gleichen Gravurparametern durchgeführt werden.

## Patentansprüche

1. Verfahren zur Gravur von gerasterten Druckzylindern für den Tiefdruck in einer elektronischen Graviermaschine, bei dem
- in Abhängigkeit von vorgegebenen Gravurparametern ein Graviersignal zur Ansteuerung eines Gravierorgans (4) gewonnen wird,
- das Gravierorgan (4) in einen rotierenden Druckzylinder (1) Näpfchen graviert, die in einem durch vorgegebene Gravurparameter definierten Raster angeordnet sind und deren Graviertiefen die gravierten Tonwerte repräsentieren,
- das Gravierorgan (4) zur flächenhaften Gravur der Näpfchen eine axial zum Druckzylinders (1) verlaufende Vorschubbewegung an dem Druckzylinder (1) entlang ausführt, wobei die Geometrie des Rasters unter anderem durch die Umfangsgeschwindigkeit des rotierenden Druckzylinders (1) und durch die Vorschubgeschwindigkeit des Gravierorgans (4) bestimmt wird und
- Umfangsgeschwindigkeit und/oder Vorschubgeschwindigkeit in Abhängigkeit von den vorgegebenen Gravurparametern eingestellt werden, **dadurch gekennzeichnet, daß**
- in einem Arbeitsgang zeitlich nacheinander ablaufende Gravuren von Gravurjobs auf Gravurbereichen (A, B) mindestens eines Druckzylinders (1) mit mindestens einem Gravierorgan (4) mittels einer gemäß den Gravurjobs programmierbaren Ablaufsteuerung automatisch durchgeführt werden und
- in der Ablaufsteuerung in Abhängigkeit von jeweils vorgegebenen Gravurparametern der einzelnen Gravurjobs Steuersignale (S) erzeugt werden, welche entsprechend der Lage der einzelnen Gravurbereiche (A, B) auf dem oder den Druckzylindern (1) mindestens die axiale Position und die Vorschubgeschwindigkeit des Gravierorgans (4) sowie die Umfangsgeschwindigkeit des oder der Druckzylinder (1) nach Beendigung eines Gravurjobs für den darauffolgenden Gravurjob automatisch ändern.

2. Verfahren nach Anspruch 1, **dadurch gekennzeichnet, daß** die Steuersignale (S) zusätzlich in Abhängigkeit von dem Durchmesser des oder der jeweils verwendeten Druckzylinder (1) erzeugt werden.

3. Verfahren nach Anspruch 1 oder 2, **dadurch gekennzeichnet, daß** in der Ablaufsteuerung zusätzlich Steuersignale (S) erzeugt werden, welche die radiale Zustellung des Gravierorgans (4) zu dem oder den Druckzylindem (1), das Anlegen des Gravierorgans (4) an den oder die Druckzylinder (1) bei Gravurstart und das Abheben des Gravierorgans (4) bei Gravurende eines jeden Gravurjobs steuern.

4. Verfahren nach einem der Ansprüche 1 bis 3, **dadurch gekennzeichnet, daß** die Gravurbereiche (A, B) mit unterschiedliche Raster graviert werden.

5. Verfahren nach einem der Ansprüche 1 bis 4, **dadurch gekennzeichnet, daß** in den Gravurbereichen (A, B) Strichinformationen oder Halbtonbilder graviert werden.

6. Verfahren nach einem der Ansprüche 1 bis 5, **dadurch gekennzeichnet, daß** die Gravurbereiche (A, B) mit einem Gravierorgan (4) auf einem Druckzylinder (1) in einem Arbeitsgang graviert werden.

7. Verfahren nach einem der Ansprüche 1 bis 5, **dadurch gekennzeichnet, daß** die Gravurbereiche (A, B) mit einem Gravierorgan (4) auf mehreren Druckzylindern (1, 1') mit gleichen oder unterschiedlichen Durchmessern in einem Arbeitsgang graviert werden.

8. Verfahren nach einem der Ansprüche 1 bis 7, **dadurch gekennzeichnet, daß** die Gravurbereiche (A, B) auf mehreren Druckzylindern (1; 1') mit gleichen oder unterschiedlichen Durchmessern mit jeweils einem dem betreffenden Druckzylinder (1; 1') zugeordneten Gravierorgan (4; 4') in einem Arbeitsgang graviert werden.

9. Verfahren nach Anspruch 8, **dadurch gekennzeichnet, daß** die Gravierorgane (4; 4') auf einem axial verschiebbaren Gravierwagen (3) montiert sind.

10. Verfahren nach einem der Ansprüche 7 bis 9, **dadurch gekennzeichnet, daß** die Druckzylinder (1; 1') mechanisch gekoppelt sind und gemeinsam rotatorisch angetrieben werden.

11. Verfahren nach einem der Ansprüche 1 bis 10, **dadurch gekennzeichnet, daß** die Gravurbereiche (A, B) in axialer Richtung nebeneinander graviert werden.

12. Verfahren nach einem der Ansprüche 1 bis 10, **dadurch gekennzeichnet, daß** in dem einen Gravurbereich (A, B) eine Erstgravur und in dem anderen Gravurbereich (A, B) eine Nachgravur in der Erstgravur durchgeführt wird.

## Claims

1. Method for engraving screened printing cylinders for intaglio printing in an electronic engraving machine, in which
- an engraving signal to drive an engraving head (4) is derived as a function of specified gravure parameters,
- the engraving head (4) engraves in a rotating printing-cylinder (1) cells arranged in a screen array, defined by specified gravure parameters and whose engraving depths represent the tonal values engraved,
- for area engraving of cells, the engraving head (4) executes an advance motion along the printing cylinder (1) and axially with respect to the printing cylinder (1), the geometry of the screen being determined *inter alia* by the circumferential speed of the rotating printing cylinder (1) and by the rate of advance of the engraving head (4) and
- the circumferential speed and/or rate of advance are set as a function of the specified gravure parameters, **characterized in that**
- engraving jobs which follow one after another in time on engraving areas (A, B) of at least one printing cylinder (1) with at least one engraving head (4) are automatically carried out in a single operating cycle by means of a sequential control programmable to accommodate the engraving jobs and
- control signals (S) which after completion of one engraving job, according to the individual positions of the engraving areas (A, B) on the printing cylinder or cylinders, automatically change at least the axial position and the rate of advance of the engraving head (4) and the circumferential speed of the printing cylinder or cylinders (1) for the ensuing engraving job are generated in the sequential control as a function of gravure parameters individually specified for each job.

2. Method according to Claim 1, **characterized in that** the control signals (S) are generated also as a function of the diameter of the, or of each, printing cylinder (1) employed.

3. Method according to Claim 1 or 2, **characterized in that** control signals (S) are also generated in the sequential control which control the radial approach of the engraving head (4) to the printing cylinder or cylinders (1), the application of the engraving head (4) to the printing cylinder or cylinders (1) at the start of engraving and withdrawal of the engraving head (4) at the end of engraving of each job.

4. Method according to any one of Claims 1 to 3, **characterized in that** the engraving areas (A, B) are engraved with different screens.

5. Method according to any one of Claims 1 to 4, **characterized in that** bar codes or halftone images are engraved.

6. Method according to any one of Claims 1 to 5, **characterized in that** the engraving areas (A, B) are engraved with one engraving head (4) on one printing cylinder (1), in a single operating cycle.

7. Method according to any one of Claims 1 to 5, **characterized in that** the engraving areas (A, B) are engraved with one engraving head (4) on a plurality of printing cylinders (1, 1') of similar or dissimilar diameters, in a single operating cycle.

8. Method according to any one of Claims 1 to 7, **characterized in that** the engraving areas (A, B) are engraved on a plurality of printing cylinders (1; 1') of similar or dissimilar dissimilar diameters, each with an engraving head (4; 4') assigned to the printing cylinder (1; 1') concerned, in a single operating cycle.

9. Method according to Claim 8, **characterized in that** the engraving heads (4; 4') are mounted on an axially shiftable engraving carriage (3).

10. Method according to any one of Claims 7 to 9, **characterized in that** the printing cylinders (1; 1') are mechanically coupled and driven in rotation together.

11. Method according to any one of Claims 1 to 10, **characterized in that** the engraving areas (A, B) are engraved side by side in the axial direction.

12. Method according to any one of Claims 1 to 10, **characterized in that** in one engraving area (A, B) a primary engraving is made and in the other engraving area (A, B) a secondary engraving is made in the primary engraving.

## Revendications

1. Procédé de gravure de cylindres d'impression tramés pour l'impression en taille douce dans une machine à graver électronique selon lequel :
- en fonction de paramètres de gravure prédéterminés on forme un signal de gravure pour commander un organe de gravure (4),
- l'organe de gravure (4) grave des cuvettes dans un cylindre d'impression (1) en rotation, ces cuvettes étant associées à une trame définie par les paramètres de gravure donnés et la profondeur de gravure des cuvettes représente la valeur de tonalité à graver,
- l'organe de gravure (4) effectue un mouvement d'avance sur le cylindre d'impression (1), axialement par rapport au cylindre d'impression (1) pour graver la surface des cuvettes, la géométrie de la trame étant définie entre autre par la vitesse périphérique du cylindre d'impression rotatif (1) et par la vitesse d'avance de l'organe de gravure (4) et
- la vitesse périphérique et/ou la vitesse d'avance sont réglées en fonction des paramètres de gravure prédéterminés,
**caractérisé en ce qu'**
- au cours d'une opération, on effectue automatiquement successivement des gravures de travaux de gravure dans des zones de gravure (A, B) d'au moins un cylindre d'impression (1) avec au moins un organe de gravure (4) à l'aide d'une commande de déroulement programmable selon le travail de gravure et
- dans la commande de déroulement, en fonction des paramètres de gravure prédéterminés des différents travaux de gravure, on génère des signaux de commande (S) qui, selon la position des différentes zones de gravure (A, B) sur le ou les cylindres d'impression (1), modifient au moins la position axiale et la vitesse d'avance de l'organe de gravure (4) ainsi que la vitesse périphérique du ou des cylindres d'impression (1) à la fin d'un travail de gravure, automatiquement pour le travail de gravure suivant.

2. Procédé selon la revendication 1,
**caractérisé en ce que**
les signaux de commande (S) sont en outre générés en fonction du diamètre du ou des cylindres d'impression (1) utilisés.

3. Procédé selon l'une quelconque des revendications 1 ou 2,
**caractérisé en ce que**
dans la commande de déroulement on génère des signaux de commande (S) supplémentaires qui pour chaque travail de gravure commandent le réglage radial de l'organe de gravure (4) par rapport au cylindre d'impression (1), l'application de l'organe de gravure (4) contre le ou les cylindres d'impression (1) au départ de la gravure, et le soulèvement de l'organe de gravure (4) à la fin de la gravure.

4. Procédé selon l'une quelconque des revendications 1 à 3,
**caractérisé en ce que**
les zones de gravure (A, B) sont gravées avec des trames différentes.

5. Procédé selon l'une quelconque des revendications 1 à 4,
**caractérisé en ce qu'**
on grave des informations en trait ou en demi-teinte dans les zones de gravure (A, B).

6. Procédé selon l'une quelconque des revendications 1 à 5,
**caractérisé en ce que**
les zones de gravure (A, B) sont gravées avec un organe de gravure (4) sur un cylindre d'impression (1) au cours d'une opération.

7. Procédé selon l'une quelconque des revendications 1 à 5,
**caractérisé en ce qu'**
on grave les zones de gravure (A, B) à l'aide d'un organe de gravure (4) sur plusieurs cylindres d'impression (1, 1') de diamètres identiques ou différents au cours d'une même opération.

8. Procédé selon l'une quelconque des revendications 1 à 7,
**caractérisé en ce qu'**
on grave les zones de gravure (A, B) sur plusieurs cylindres d'impression (1, 1') de diamètres identiques ou différents avec chaque fois un organe de gravure (4, 4') associé au cylindre d'impression (1, 1') correspondant au cours d'une même opération.

9. Procédé selon la revendication 8,
**caractérisé en ce que**
les organes de gravure (4, 4') sont montés sur un chariot de gravure (3) coulissant axialement.

10. Procédé selon l'une quelconque des revendications 7 à 9,
**caractérisé en ce que**
les cylindres d'impression (1, 1') sont couplés mécaniquement et entraînés en commun, en rotation.

11. Procédé selon l'une quelconque des revendications 1 à 10,
**caractérisé en ce que**
les zones de gravure (A, B) sont gravées l'une à côté de l'autre dans la direction axiale.

12. Procédé selon l'une quelconque des revendications 1 à 10,
**caractérisé en ce que**
dans une zone de gravure (A, B) on effectue une première gravure et dans l'autre zone de gravure (A, B) on effectue une gravure complémentaire dans la première gravure.
